# EUROPEAN PATENT APPLICATION

(11) **EP 4 744 472 A1**
(43) Date of publication of application: **20.05.2026**
(21) Application number: 25169914.6
(22) Date of filing: 11.04.2025
(51) Int. Cl.: A01D 34/78, A01D 34/81

(54) **STAND-ON LAWN MOWER**

(30) Priority: 14.11.2024 CN 202422785064 U
(71) Applicant: Nanjing Chervon Industry Co., Ltd., Nanjing, Jiangsu 211106 (CN)
(72) Inventor: ZHANG, Tao, Nanjing (CN); YAMAOKA, Toshinari, Nanjing (CN); LI, Li, Nanjing (CN); LU, Wei, Nanjing (CN)
(74) Representative: Sun, Yiming

(57) **Abstract**

A stand-on lawn mower includes: a cutting assembly including a mowing element and a chassis; a frame; a walking device supporting the frame; a housing device mounted to the frame and including at least an operation console and a front-face housing assembly; and an energy storage device including at least one battery pack. The front-face housing assembly includes: a compartment assembly provided with an accommodation space for accommodating the at least one battery pack and an opening that allows the accommodation space to be open; and a cover plate covering the opening of the compartment assembly. The cover plate has a closed state and an open state, where the opening is closed when the cover plate is in the closed state and the opening is open when the cover plate is in the open state. The stand-on lawn mower is further provided with a left support platform supporting the user to allow the user to pull out or insert the at least one battery pack from a left side and a right support platform supporting the user to allow the user to pull out or insert the at least one battery pack from a right side. The stand-on lawn mower enables the user to conveniently detach or mount the battery pack.

## Description

### TECHNICAL FIELD

The present application relates to an outdoor garden tool and, in particular, to a stand-on lawn mower.

### BACKGROUND

A stand-on lawn mower is a common mowing device with high efficiency and easy to operate. Stand-on lawn mowers are classified into electric stand-on lawn mowers and gasoline stand-on lawn mowers based on the energy source. However, the energy source of a stand-on lawn mower is typically non-detachable, which makes the operation of the stand-on lawn mower relatively troublesome.

This part provides background information related to the present application, and the background information is not necessarily the existing art.

### SUMMARY

An object of the present application is to solve or at least alleviate part or all of the preceding problems. To this end, an object of the present application is to provide a stand-on lawn mower that is convenient to operate.

To achieve the preceding object, the present application adopts the technical solutions below.

In an example, a stand-on lawn mower includes: a cutting assembly including a mowing element for mowing grass and a chassis for accommodating at least part of the mowing element; a frame, wherein the cutting assembly is mounted to the frame and at least partially located on a lower side of the frame; a walking device supporting the frame and including a front wheel assembly and a rear wheel assembly; a housing device mounted to the frame and including at least an operation console located at a rear end of the frame and a front-face housing assembly located on a front side of the operation console, wherein the operation console is provided with an operation panel for a user to operate; and an energy storage device including at least one battery pack, wherein the energy storage device is configured to supply power to at least the walking device. The front-face housing assembly includes: a compartment assembly provided with an accommodation space for accommodating the at least one battery pack and an opening that allows the accommodation space to be open; and a cover plate covering the opening of the compartment assembly. The cover plate has a closed state and an open state, the opening is closed when the cover plate is in the closed state, and the opening is open when the cover plate is in the open state. The stand-on lawn mower is further provided with a left support platform supporting the user to allow the user to pull out or insert the at least one battery pack from a left side and a right support platform supporting the user to allow the user to pull out or insert the at least one battery pack from a right side.

In an example, the chassis includes a left support portion and a right support portion that protrude from the frame in a left-right direction, the left support portion is provided with the left support platform, and the right support portion is provided with the right support platform.

In an example, the cover plate is rotatably connected to the compartment assembly.

In an example, the stand-on lawn mower further includes a locking assembly to lock the cover plate to a rear end of the compartment assembly or the operation console.

In an example, the locking assembly has a locking state and an unlocking state, and the cover plate is turned forward when the locking assembly is in the unlocking state.

In an example, the locking assembly has the locking state and the unlocking state, the cover plate is turned to the open state when the locking assembly is in the unlocking state, and the stand-on lawn mower further includes a limiting device to limit the locking assembly to the locking state.

In an example, the limiting device includes a limiting member to limit the locking assembly and a safety key to drive the limiting member to move.

In an example, the cover plate is rotatably connected to a front end of the compartment assembly, and the cover plate is capable of being operated to turn backward to switch to the open state.

In an example, the at least one battery pack includes a first battery pack located at a first position and a second battery pack located at a second position in a front-rear direction, and the second battery pack is located on a front side of the first battery pack and is lower than the first battery pack.

In an example, when the cover plate is at a closed position, an angle formed between a plane where a top surface of the cover plate is located and a front-rear direction is greater than or equal to 5 degrees and less than or equal to 30 degrees.

In an example, a stand-on lawn mower includes: a cutting assembly including a mowing element for mowing grass and a chassis for accommodating at least part of the mowing element; a frame, wherein the cutting assembly is mounted to the frame and at least partially located on a lower side of the frame; a walking device supporting the frame and including a front wheel assembly and a rear wheel assembly; a housing device mounted to the frame and including at least an operation console located at a rear end of the frame and a front-face housing assembly located on a front portion of the operation console, wherein the operation console is provided with an operation panel for a user to operate; and an energy storage device including at least one battery pack, wherein the energy storage device is configured to supply power to at least the walking device. The front-face housing assembly includes: a compartment assembly provided with an accommodation space for accommodating the at least one battery pack and an opening that allows the accommodation space to be open; and a cover plate covering the opening of the compartment assembly. The cover plate has a closed state and an open state, the opening is closed when the cover plate is in the closed state, the opening is open when the cover plate is in the open state, the compartment assembly includes at least a front side surface, a left side surface, and a right side surface, the cover plate is at least partially disposed on an upper side of the compartment assembly, and the cover plate is at least partially located on a front side of the front side surface when the cover plate switches to the open state.

In an example, an illumination assembly is mounted on the front side surface.

In an example, the cover plate is rotatably connected to the left side surface and/or the right side surface.

In an example, a stand-on lawn mower includes: a cutting assembly including a mowing element for mowing grass and a chassis for accommodating at least part of the mowing element; a frame, wherein the cutting assembly is mounted to the frame and at least partially located on a lower side of the frame; a walking device supporting the frame and including a front wheel assembly and a rear wheel assembly; a housing device mounted to the frame and including at least an operation console located at a rear end of the frame and a front-face housing assembly located on a front portion of the operation console, wherein the operation console is provided with an operation panel for a user to operate; and an energy storage device including at least one battery pack, wherein the energy storage device is configured to supply power to at least the walking device. The front-face housing assembly includes: a compartment assembly provided with an accommodation space for accommodating the at least one battery pack and an opening that allows the accommodation space to be open; and a cover plate covering the opening of the compartment assembly. The cover plate has a closed state and an open state, the opening is closed when the cover plate is in the closed state, the opening is open when the cover plate is in the open state, and the cover plate is rotatably connected to the compartment assembly about a first axis, the cover plate has a frontmost end and a rearmost end that are disposed opposite to each other in a front-rear direction, and a distance between a first axis and the frontmost end in an up-down direction is greater than or equal to 80 millimeters and less than or equal to 300 millimeters.

In an example, a distance between the first axis and the frontmost end in the front-rear direction is less than a distance between the first axis and the rearmost end in the front-rear direction.

In an example, a ratio of a distance between the first axis and the frontmost end in the front-rear direction to a distance between the first axis and the rearmost end in the front-rear direction is lower than or equal to 0.4.

In an example, a distance between the first axis and the frontmost end in the front-rear direction is greater than or equal to 50 millimeters and less than or equal to 150 millimeters.

In an example, an angle between a line connecting the first axis to the frontmost end and the front-rear direction is greater than or equal to 20 degrees and less than or equal to 80 degrees.

In an example, the stand-on lawn mower further includes: a connecting assembly for rotatably connecting the cover plate to the compartment assembly. The connecting assembly includes: a rotating shaft portion mounted to a left side surface and/or a right side surface of the compartment assembly; and a connecting plate connecting the rotating shaft portion to the cover plate.

In an example, the cover plate includes a main body portion, wherein the main body portion is a plastic member, and the connecting plate is a metal member.

The present application has the following benefit: after the cover plate is opened, the user can detach or mount the battery pack from the left or right side so that the operation is more convenient.

### BRIEF DESCRIPTION OF THE DRAWINGS

FIG. 1 is a perspective view of a stand-on lawn mower as an example of the present application;
FIG. 2 is a left view of the stand-on lawn mower in FIG. 1 when a cover plate is in a closed state;

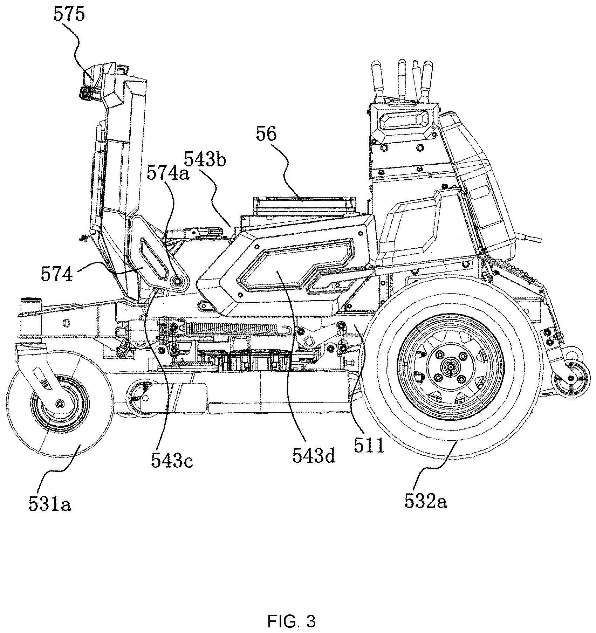

FIG. 3 is a left view of the stand-on lawn mower in FIG. 1 when a cover plate is in an open state;

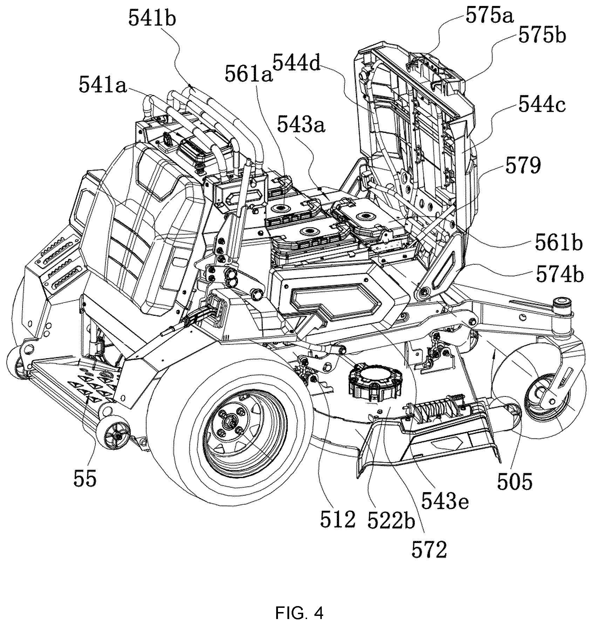

FIG. 4 is a perspective view of the stand-on lawn mower in FIG. 1 from another viewing angle;
FIG. 5 is a schematic diagram of the connection among a mowing element, a mowing motor, a rear wheel, a drive motor, and an energy storage device of the stand-on lawn mower in FIG. 1;
FIG. 6 is a sectional view of a cover plate, a connecting assembly, a locking assembly, and a limiting member in FIG. 1; and
FIG. 7 is an enlarged view of a partial region in FIG. 6.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

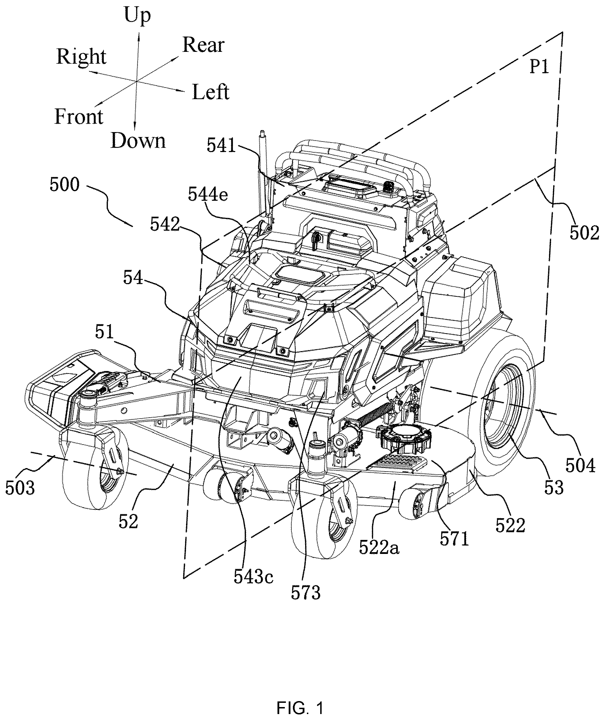

As shown in FIG. 1, a stand-on working machine disclosed in the present application can be operated by a user standing on it to perform target operations, such as mowing lawns and vegetation, cleaning the ground, or clearing snow. In this example, a stand-on lawn mower 500 is used as an example of the stand-on working machine. The stand-on lawn mower 500 can be operated by the user standing on it to mow lawns and other vegetation. In this specification, front, rear, left, right, up, and down are described as directions shown in FIG. 1. When the user stands on the stand-on lawn mower 500 on the ground, it is defined that the direction which the user faces is front, the direction which the user faces away from is rear, the direction on the left-hand side of the user is left, the direction on the right-hand side of the user is right, the direction toward the ground is down, and the direction away from the ground is up. The technical solutions in the present application are also applicable to other stand-on working machines in addition to the stand-on lawn mower 500, such as a stand-on snow thrower and a stand-on cleaning machine.

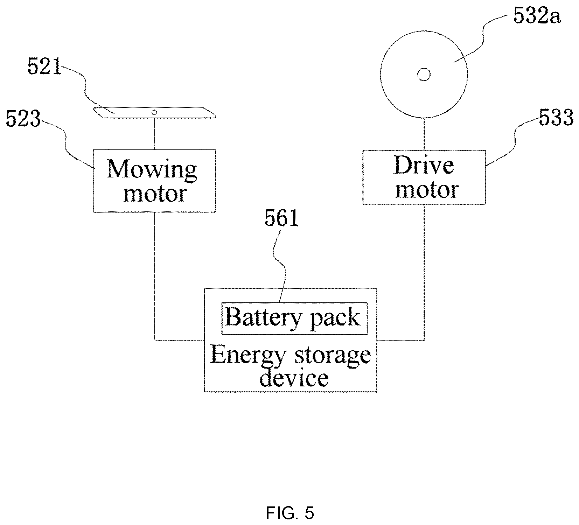

As shown in FIGS. 1 and 5, the stand-on lawn mower 500 includes a frame 51, a cutting assembly 52, a walking device 53, a housing device 54, an operation support platform 55, and an energy storage device 56. The frame 51 forms a main support assembly of the stand-on lawn mower 500 and is used for supporting and connecting the cutting assembly 52, the housing device 54, and the energy storage device 56.

The frame 51 extends substantially along a front-rear direction 501. The frame 51 may include a first longitudinal beam 511 and a second longitudinal beam 512 that extend along the front-rear direction 501. The front-rear direction 501 may be understood as a direction parallel to a horizontal plane or the ground when the stand-on lawn mower 500 stands on the ground parallel to the horizontal plane, a direction parallel to another plane when the stand-on lawn mower 500 stands on that plane, or a direction parallel to the center axis 502 of the stand-on lawn mower 500.

The walking device 53 is connected to the frame 51 to support the frame 51 and can drive the stand-on lawn mower 500 to walk on the ground. In this example, the walking device 53 includes a front wheel assembly 531 and a rear wheel assembly 532. The front wheel assembly 531 includes two front wheels 531a, and the rear wheel assembly 532 includes two rear wheels 532a. In other examples, the front wheel assembly 531 may include only one front wheel 531a. In other examples, the rear wheel assembly 532 may also include only one rear wheel 532a. In this example, the front wheels 531a may be universal wheels, and the rear wheels 532a are driving wheels. The walking device 53 further includes a drive motor 533 for driving the rear wheel assembly 532. For example, a walking assembly may include two drive motors 533 driving the two rear wheels 532a one to one.

The cutting assembly 52, as the execution device of the stand-on lawn mower 500, includes a mowing element 521 for mowing grass and a chassis 522 for accommodating at least part of the mowing element 521. The cutting assembly 52 is mounted to the frame 51 and at least partially located on the lower side of the frame 51. In other examples, the execution device may be a snow throwing assembly to implement the snow throwing function of the stand-on working machine, or the execution device may be a cleaning brush to implement the cleaning function of the stand-on working machine. In this example, the cutting assembly 52 includes three mowing elements 521 mounted in the space surrounded by the chassis 522. The cutting assembly 52 further includes a mowing motor 523 to drive the mowing element 521 to rotate. In this example, the cutting assembly 52 includes three mowing motors 523 driving the three mowing elements 521 one to one. In other examples, the number of mowing elements 521 and the number of mowing motors 523 may be two, four, or more and are not limited.

The housing device 54 is mounted to the frame 51 and used for accommodating the energy storage device, a circuit board, and the like. The housing device 54 includes an operation console 541 and a front-face housing assembly 542 located on the front side of the operation console 541. The operation console 541 is mounted to the rear end of the frame 51. One end of the operation console 541 is connected to the frame 51. The operation console 541 extends substantially upward from the frame 51. An operation panel 541a and an operation assembly 541b are disposed at the upper end of the operation console 541. A display panel, an operation button, a toggle, a switch, and the like may be disposed on the operation panel 541a. The operation assembly 541b includes an operation rod and is also mounted on the operation panel 541a. The user may operate the operation panel 541a and the operation assembly 541b at the upper end of the operation console 541 to control the stand-on lawn mower 500 to walk or perform mowing actions. The operation console 541 also surrounds a cavity. Devices such as the circuit board and a cable may be disposed in the cavity. The preceding drive motor 533 may also be at least partially disposed in the cavity or may be connected to the operation console 541. The preceding operation support platform 55 is disposed on the rear side of the operation console 541. The user stands on the operation support platform 55 so that the user can move on the ground along with the stand-on lawn mower 500 and conveniently operate the operation panel 541a and the operation assembly 541b located on the operation console 541.

The front-face housing assembly 542 is disposed on the front side of the operation console 541 and is used for mounting and accommodating the energy storage device 56. The front-face housing assembly 542 and the operation support platform 55 are located on two sides of the operation console 541, respectively. In this manner, the center of gravity of the stand-on lawn mower 500 can be balanced so that the stand-on lawn mower 500 climbs a slope more stably.

The energy storage device 56 is configured to supply power to at least the walking device 53. For example, the energy storage device 56 is configured to supply power to the drive motor 533. In this example, the energy storage device 56 is also configured to supply power to the cutting assembly 52. For example, the energy storage device 56 supplies power to the mowing motor 523. The energy storage device 56 includes at least one battery pack 561. The at least one battery pack 561 is electrically connected to the drive motor 533 to supply power to the drive motor 533. The at least one battery pack 561 is electrically connected to the mowing motor 523 to supply power to the mowing motor.

In this example, the energy storage device 56 includes four battery packs 561. In other examples, the energy storage device 56 may include more than two battery packs 561, more than three battery packs 561, more than four battery packs 561, more than five battery packs 561, or more than six battery packs 561.

In some examples, each of the battery packs 561 may be a lithium battery pack, a lithium iron phosphate battery pack, a supercapacitor battery pack, a solid-state battery pack, a semi-solid-state battery pack, a pouch battery pack, a sodium-ion battery pack, a silicon-carbon battery pack, or a full-tab battery pack.

In some examples, the energy storage device 56 includes multiple battery packs 561. The multiple battery packs 561 include at least a first type of battery pack having a first material characteristic and a second type of battery pack having a second material characteristic. For example, the multiple battery packs 561 include lithium battery packs 561 and lithium iron phosphate battery packs 561.

In some examples, the energy storage device 56 includes multiple battery packs 561. The multiple battery packs 561 include at least a first type of battery pack having a first volume characteristic and a second type of battery pack having a second volume characteristic.

In some examples, the energy storage device 56 includes multiple battery packs 561. The multiple battery packs 561 include at least a first type of battery pack having a first energy characteristic and a second type of battery pack having a second energy characteristic.

The front-face housing assembly 542 includes a compartment assembly 543 and a cover plate 544. The compartment assembly 543 is provided with an accommodation space 543a for accommodating the energy storage device 56. The accommodation space 543a is used for accommodating the at least one battery pack 561 mentioned above. The compartment assembly 543 is also provided with an opening 543b that allows the accommodation space 543a to be open. In some examples, the opening 543b is provided on the upper side of the compartment assembly 543 to allow the accommodation space 543a to be open upward. The cover plate 544 covers the opening 543b of the compartment assembly 543, enabling the opening 543b to be open or closed. Each battery pack 561 of the at least one battery pack 561 is detachably disposed in the accommodation space 543a. The user may mount the battery pack 561 in the accommodation space 543a or pull out the battery pack 561 from the accommodation space 543a through the opening 543b. In some examples, after the battery pack 561 is detached from the accommodation space 543a, the battery pack 561 may also be configured to supply power to other handheld or hand-push power tools. The battery pack 561 has a coupling portion. The coupling portion is configured to be electrically and/or mechanically connected to an adaptation portion in the accommodation space 543a. The coupling portion is also configured to be electrically and/or mechanically connected to an adaptation portion of another power tool. When the battery pack 561 is mounted in the compartment assembly 543, the battery pack 561 is located on the front side of the operation console 541. In this manner, the center of gravity of the energy storage device 56 and the center of gravity of the user standing on the operation support platform 55 are located on the two sides of the operation console 541, respectively. The energy storage device 56 is disposed between the front wheel axis 503 of each of the front wheels 531a and the rear wheel axis 504 of each of the rear wheels 532a. The front-face housing assembly 542 is also located between the front wheel axis 503 and the rear wheel axis 504. The cover plate 544 may have a closed state and an open state. When the cover plate 544 is in the closed state, the opening 543b is closed, and the battery pack 561 is sealed in the accommodation space 543a. When the cover plate 544 is in the open state, the opening 543b is open, and the user can pull out or insert the battery pack 561.

The preceding battery packs 561 may include a first battery pack 561a located at a first position and a second battery pack 561b located at a second position in the front-rear direction 501. The second battery pack 561b is located on the front side of the first battery pack 561a. The second battery pack 561b is lower than the first battery pack 561a in an up-down direction. Thus, the cover plate 544 is tilted with respect to the ground. When the cover plate 544 is at a closed position, an angle A1 of greater than or equal to 5 degrees and less than or equal to 30 degrees is formed between the plane P1 where the top surface of the cover plate 544 is located and the front-rear direction 501.

The stand-on lawn mower 500 is also provided with a left support platform 571 and a right support platform 572. The left support platform 571 is used for supporting the user to allow the user to pull out or insert the battery pack 561 from a left side. The right support platform 572 is also used for supporting the user to allow the user to pull out or insert the battery pack 561 from a right side. Thus, the user can mount the battery pack 561 from the left side and the right side, which is more convenient for the operation of the user.

When the energy storage device 56 includes the multiple battery packs 561, the user can stand on the left support platform 571 to mount part of the battery packs 561 and stand on the right support platform 572 to mount the other part of the battery packs 561. Thus, the user can be prevented from being incapable of reaching a battery pack 561 located far away.

On the other hand, the stand-on lawn mower 500 may be parked with the left side against a wall or with the right side against a wall. In this manner, for different users or in the case where the user needs to park the stand-on lawn mower 500 in different areas, the user can very conveniently choose to stand on the left support platform 571 or the right support platform 572 to mount or detach the battery packs 561. When the stand-on lawn mower 500 is parked with the left side against the wall, the user may stand on the right support platform 572 to pull out or insert the battery packs 561. When the stand-on lawn mower 500 is parked with the right side against the wall, the user can stand on the left support platform 571 to pull out or insert the battery packs 561.

The chassis 522 includes a left support portion 522a and a right support portion 522b that protrude from the frame 51 in a left-right direction. The left-right direction is perpendicular to the front-rear direction 501. The preceding left support platform 571 is disposed on the left support portion 522a, and the preceding right support platform 572 is disposed on the right support portion 522b. The chassis 522 forms the left support platform 571 and the right support platform 572 so that the structure is simple. It is unnecessary to additionally provide the left support platform 571 and the right support platform 572, thus reducing costs.

As mentioned above, the cutting assembly 52 includes the three mowing elements 521. The chassis 522 includes three cutting sections correspondingly. The three mowing elements 521 are disposed in the three cutting sections one to one. The portion of the chassis 522 that accommodates the mowing element 521 on the left side provides the preceding left support portion 522a, and the portion of the chassis 522 that accommodates the mowing element 521 on the right side provides the preceding right support portion 522b.

Thus, when the user needs to detach the battery packs 561, the user can stand on the left support platform 571 of the chassis 522 or the right support platform 572 of the chassis 522 to detach the battery packs 561.

In some examples, the frame 51 or the housing assembly is provided with the left support platform 571 and the right support platform 572. Thus, the left support platform 571 and the right support platform 572 can be relatively high from the ground, which is more convenient for the user to detach or mount the battery packs 561.

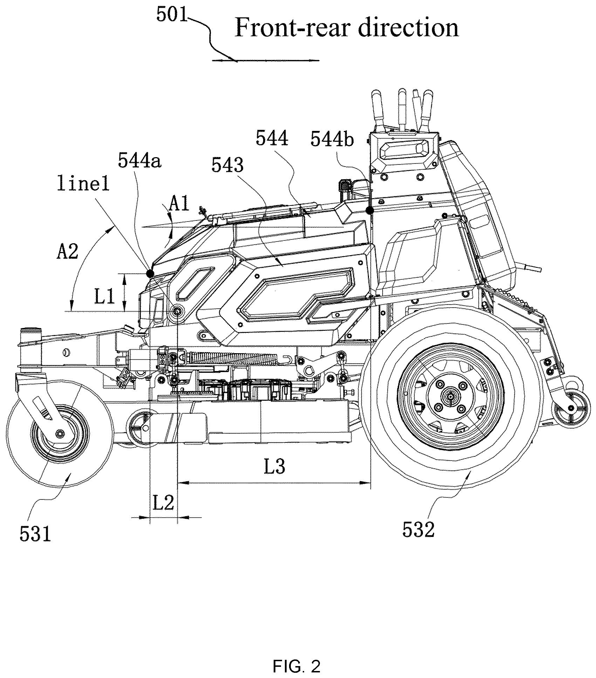

The compartment assembly 543 includes a front side surface 543c, a left side surface 543d, and a right side surface 543e. The compartment assembly 543 may provide the rear side surface. Alternatively, the rear side surface may be formed by part of the operation console 541 so that the compartment assembly 543 does not need to be provided with the rear side surface independently. The cover plate 544 covers the opening 543b on the upper side of the compartment assembly 543. As shown in FIG. 2, when the cover plate 544 switches from the closed state to the open state, the opening 543b is open, and the cover plate 544 is at least partially located on the front side of the front side surface 543c. Thus, a space for accommodating the cover plate 544 when the cover plate 544 switches to the open state can be provided in front of the front side surface 543c. When the cover plate 544 is in the closed state, the cover plate 544 is located on the upper side of the compartment assembly 543. Thus, the front-face housing assembly 542 has a relatively small dimension in the front-rear direction 501. It is unnecessary to increase the dimension of the frame 51. The user standing on the operation support platform 55 is not affected when viewing the floating roller of the chassis 522 on the front side of the front-face housing assembly 542.

In this example, an illumination assembly 573 is disposed on the front side surface 543c. The illumination assembly 573 emits light toward the region in front of the stand-on lawn mower 500, making it convenient for the user to view the region in front.

The cover plate 544 is rotatably connected to the compartment assembly 543. In some examples, the cover plate 544 is rotatably connected to the compartment assembly 543 about a first axis 505. The cover plate 544 may rotate about the first axis 505 to the closed state and the open state.

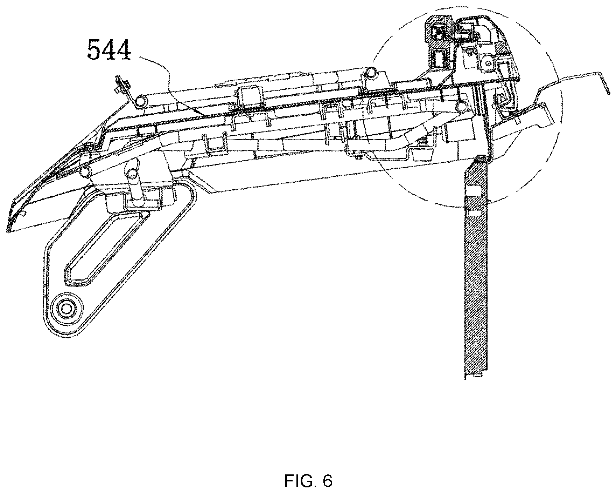

The cover plate 544 has the frontmost end 544a and the rearmost end 544b that are disposed opposite to each other in the front-rear direction 501. As shown in FIGS. 2 and 6, the cover plate 544 has a left view in the figure. The frontmost endpoint of the cover plate 544 in the left view is understood as the frontmost end 544a of the cover plate 544, and the rearmost endpoint of the cover plate 544 in the left view is understood as the rearmost end 544b. The distance L1 between the first axis 505 and the frontmost end 544a in the up-down direction is greater than or equal to 80 millimeters and less than or equal to 300 millimeters. Thus, the first axis 505 and the cover plate 544 are spaced apart by a certain distance in the up-down direction so that when the cover plate 544 rotates about the first axis 505 to the open state, the compartment assembly 543 does not interfere with the cover plate 544 and does not prevent the cover plate 544 from rotating.

In some examples, the distance L2 between the first axis 505 and the frontmost end 544a in the front-rear direction 501 is less than the distance L3 between the first axis 505 and the rearmost end 544b in the front-rear direction 501. In some examples, the ratio of the distance L2 between the first axis 505 and the frontmost end 544a in the front-rear direction 501 to the distance L3 between the first axis 505 and the rearmost end 544b in the front-rear direction 501 is higher than or equal to 0.1. In some examples, the distance L2 between the first axis 505 and the frontmost end 544a in the front-rear direction 501 is greater than or equal to 50 millimeters and less than or equal to 150 millimeters. In some examples, the angle A2 between line 1 connecting the first axis 505 to the frontmost end 544a and the front-rear direction 501 is greater than or equal to 20 degrees and less than or equal to 80 degrees. Thus, the cover plate 544 can be connected to the left side surface 543d and/or the right side surface 543e with greater strength and a larger dimension, respectively. The weight of the cover plate 544 can be transferred to the left side surface 543d or the right side surface 543e and then to the frame 51. On the other hand, the first axis 505 is spaced by a certain distance from the frontmost end 544a in the front-rear direction 501 so that the movement path of the cover plate 544 can avoid the compartment assembly 543. In addition, the opening 543b can be opened wider, making it easier to detach or mount the battery packs 561.

In some examples, the ratio of the distance L2 between the first axis 505 and the frontmost end 544a in the front-rear direction 501 to the distance L3 between the first axis 505 and the rearmost end 544b in the front-rear direction 501 is higher than or equal to 0.1 and lower than 0.5. In some examples, the ratio of the distance L2 between the first axis 505 and the frontmost end 544a in the front-rear direction 501 to the distance L3 between the first axis 505 and the rearmost end 544b in the front-rear direction 501 is lower than or equal to 0.4.

The stand-on lawn mower 500 further includes a connecting assembly 574 for connecting the cover plate 544 to the compartment assembly 543. The connecting assembly 574 includes a rotating shaft portion 574a and a connecting plate 574b. The rotating shaft portion 574a is mounted to the left side surface 543d and the right side surface 543e. The connecting plate 574b connects a rotating portion to the cover plate 544. The connecting plate 574b can rotate with respect to the first axis 505 to drive the cover plate 544 to rotate.

The cover plate 544 includes a main body portion 544c, a reinforcement portion 544d, and a support portion 544e. The main body portion 544c is a light plastic member and is used for closing the opening 543b. The reinforcement portion 544d is connected to the main body portion 544c to increase the strength of the cover plate 544. The reinforcement portion 544d may be a metal member. The reinforcement portion 544d is at least partially disposed on the lower side of the cover plate 544. The support portion 544e is disposed on the upper side of the cover plate 544 to form a carrier. The support portion 544e may be a metal member. The user may place fertilizers, tools, and other items on the support portion 544e. The support portion 544e is also fixedly connected to the reinforcement portion 544d so that the weight of the items carried on the support portion 544e can be transferred to the reinforcement portion 544d through the support portion 544e, thereby avoiding damage to the main body portion 544c.

The preceding connecting plate 574b may be a metal member so that the weight of the items disposed on the cover plate 544 can be transferred to the left side surface 543d or the right side surface 543e through the connecting plate 574b.

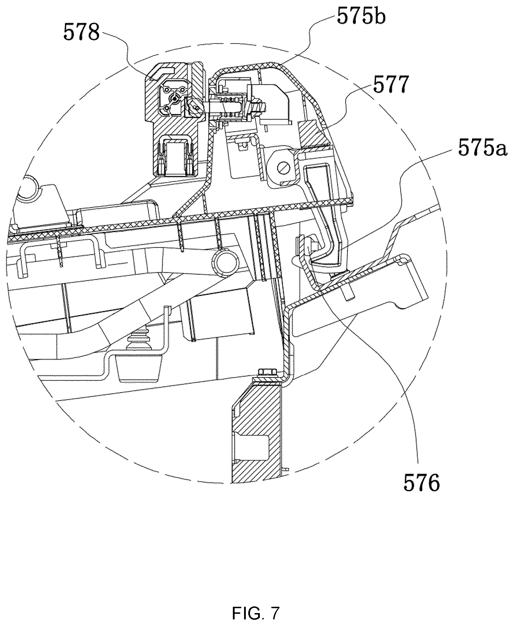

As shown in FIGS. 6 and 7, the stand-on lawn mower 500 further includes a locking assembly 575. The locking assembly 575 is used for locking the cover plate 544 to the rear end of the compartment assembly 543 or the operation console 541. The locking assembly 575 has a locking state and an unlocking state. When the locking assembly 575 is in the locking state, the locking assembly 575 locks the cover plate 544 in the closed state. When the locking assembly 575 is in the unlocking state, the cover plate 544 is turned forward to switch from the closed state to the open state.

The locking assembly 575 includes a locking member 575a and an operation member 575b. A mating member 576 mating with the locking member 575a is disposed on the compartment assembly 543 or the operation console 541. When the locking member 575a is connected to the mating member 576, the cover plate 544 is locked, and when the locking member 575a is disengaged from the mating member 576, the cover plate 544 is released. The operation member 575b is operated by the user to switch the locking member 575a from the state of mating with the mating member 576 to the state of being disengaged from the mating member 576.

The stand-on lawn mower 500 further includes a limiting member 577 to limit the locking assembly 575 and a safety key 578 to drive the limiting member 577 to move. The limiting member 577 is disposed on a movement path for the locking member 575a to switch from the state of mating with the mating member 576 to the state of being disengaged from the mating member 576. The user may drive the limiting member 577 with the safety key 578 to remove the limitation on the locking member 575a. The safety key 578 is provided so that the battery packs 561 can be prevented from being stolen.

The safety key 578 may also be configured to start the stand-on lawn mower 500. Thus, one safety key 578 has multiple functions, which is convenient for the operation of the user.

A drive assembly 579 is also disposed between the compartment assembly 543 and the cover plate 544. The drive assembly 579 is used for driving the cover plate 544 to automatically switch to the open state when the locking member 575a is disengaged from the mating member 576. The drive assembly 579 may be a pressure drive assembly 579, such as a pneumatic rod, a hydraulic rod, or a compression spring.

In some examples, the cover plate 544 may be rotatably connected to the front end of the compartment assembly 543 so that the cover plate 544 can be operated to turn backward to switch to the open state. Thus, the user can mount the battery packs 561 from the left, right, and front sides.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A stand-on lawn mower (500), comprising:
a cutting assembly (52) comprising a mowing element (521) for mowing grass and a chassis (522) for accommodating at least part of the mowing element;
a frame (51), wherein the cutting assembly is mounted to the frame and at least partially located on a lower side of the frame;
a walking device (53) supporting the frame and comprising a front wheel assembly (531) and a rear wheel assembly (532);
a housing device (54) mounted to the frame and comprising at least an operation console (541) located at a rear end of the frame and a front-face housing assembly (542) located on a front side of the operation console, wherein the operation console is provided with an operation panel (541a) for a user to operate; and
an energy storage device (56) comprising at least one battery pack (561), wherein the energy storage device is configured to supply power to at least the walking device;
wherein the front-face housing assembly comprises:
a compartment assembly (543) provided with an accommodation space (543a) for accommodating the at least one battery pack and an opening (543b) that allows the accommodation space to be open; and
a cover plate (544) covering the opening of the compartment assembly;
wherein the cover plate has a closed state and an open state, the opening is closed when the cover plate is in the closed state, the opening is open when the cover plate is in the open state, and the stand-on lawn mower is further provided with a left support platform (571) supporting the user to allow the user to pull out or insert the at least one battery pack from a left side and a right support platform (572) supporting the user to allow the user to pull out or insert the at least one battery pack from a right side.

2. The stand-on lawn mower according to claim 1, wherein the chassis comprises a left support portion (522a) and a right support portion (522b) that protrude from the frame in a left-right direction, the left support portion is provided with the left support platform, and the right support portion is provided with the right support platform.

3. The stand-on lawn mower according to claim 1, wherein the cover plate is rotatably connected to the compartment assembly.

4. The stand-on lawn mower according to claim 3, further comprising a locking assembly (575) to lock the cover plate to a rear end of the compartment assembly or the operation console.

5. The stand-on lawn mower according to claim 4, wherein the locking assembly has a locking state and an unlocking state, and the cover plate is turned forward when the locking assembly is in the unlocking state.

6. The stand-on lawn mower according to claim 5, wherein the locking assembly has the locking state and the unlocking state, the cover plate is turned to the open state when the locking assembly is in the unlocking state, and the stand-on lawn mower further comprises a limiting device to limit the locking assembly to the locking state.

7. The stand-on lawn mower according to claim 6, wherein the limiting device comprises a limiting member (577) to limit the locking assembly and a safety key (578) to drive the limiting member to move.

8. The stand-on lawn mower according to claim 1, wherein the cover plate is rotatably connected to a front end of the compartment assembly, and the cover plate is capable of being operated to turn backward to switch to the open state.

9. The stand-on lawn mower according to claim 1, wherein the at least one battery pack comprises a first battery pack (561a) located at a first position and a second battery pack (561b) located at a second position in a front-rear direction, and the second battery pack is located on a front side of the first battery pack and is lower than the first battery pack.

10. The stand-on lawn mower according to claim 1, wherein when the cover plate is at a closed position, an angle formed between a plane where a top surface of the cover plate is located and a front-rear direction is greater than or equal to 5 degrees and less than or equal to 30 degrees.

11. The stand-on lawn mower according to claim 1, wherein the compartment assembly comprises at least a front side surface (543c), a left side surface (543d), and a right side surface (543e), the cover plate is at least partially disposed on an upper side of the compartment assembly, and the cover plate is at least partially located on a front side of the front side surface when the cover plate switches to the open state.

12. The stand-on lawn mower according to claim 11, wherein an illumination assembly (573) is mounted on the front side surface.

13. The stand-on lawn mower according to claim 11, wherein the cover plate is rotatably connected to the left side surface and/or the right side surface.

14. The stand-on lawn mower according to claim 1, wherein the cover plate is rotatably connected to the compartment assembly about a first axis (505), the cover plate has a frontmost end (544a) and a rearmost end (544b) that are disposed opposite to each other in a front-rear direction, and a distance between the first axis and the frontmost end in an up-down direction is greater than or equal to 80 millimeters and less than or equal to 300 millimeters.

15. The stand-on lawn mower according to claim 14, wherein a distance between the first axis and the frontmost end in the front-rear direction is less than a distance between the first axis and the rearmost end in the front-rear direction.
